# EUROPEAN PATENT APPLICATION

(11) **EP 1 761 050 A2**
(43) Date of publication of application: **07.03.2007**
(21) Application number: 06254531.4
(22) Date of filing: 31.08.2006
(51) Int. Cl.: H04N 5/76

(54) **Method of controlling personal video recorder and personal video recorder using the same**

(30) Priority: 31.08.2005 KR 20050080699
(71) Applicant: LG Electronics Inc., Youngdungpo-Gu Seoul (KR)
(72) Inventor: Kim, Yong Chul, Seo-gu, Gwangju (KR)
(74) Representative: Camp, Ronald

(57) **Abstract**

The method and the personal video recorder enable simultaneous operations of recording and time-shifting. The personal video recorder has a storage medium (180) for storing a video stream received in real time and includes a key input unit (191) for inputting at least one of a recording command and a time-shift command according to a user selection; a downloader (150) for downloading, according to the recording command, the received video stream for storage in the storage medium (180); an uploader (160) for uploading, according to the time-shift command, the video stream stored in the storage medium (180); and a controller (190) for independently controlling the downloading via the downloader (150) and the uploading via the uploader (160). The method of controlling the personal video recorder includes steps of downloading the video stream to a storage medium (180) in response to an input to the personal video recorder of at least one of a recording command and a time-shift command; and uploading the broadcast signal from the storage medium (180) simultaneously with the downloading, if the time-shift command is input while the downloading proceeds in response to the recording command.

## Description

This application claims the benefit of Korean Patent Application No. 10-2005-0080699, filed on August 31, 2005.

The present invention relates to a personal video recorder. More particularly, it relates to a method of controlling a personal video recorder and to a personal video recorder using the same. Although the present invention is suitable for a wide scope of applications, it is particularly suitable for enabling simultaneous operations of recording and time-shifting.

A personal video recorder, which may be integrated within a television receiver or provided as a supplementary device or set-top box, includes a storage medium such as a hard disc drive for recording (storing) and reproducing video signals including their associated audio components. The stored signals are digital signals, encoded for storage in a transport stream format, such as digital broadcast signals received from a broadcast station. Personal video recorders typically employ a hard disc drive as a storage medium to enable a received broadcast signal (or an external input signal from an external player) to be stored in and reproduced from the hard disc according to a time-shift function and in response to a user selection input. The time-shift function is enabled when a broadcast signal, received in real time, is stored in the storage medium.

A personal video recorder is typically connected to a tuner, which selectively receives (tunes) a broadcast signal in real time as a series of programs. After demodulation of the tuned signal, a decoder enables a time-shifted reproduction of the broadcast signal by outputting a transport stream, which is respectively processed as video data, audio data, and additional data. That is, to reproduce a program of the broadcast signal as desired, the output transport stream is first stored in the storage medium of the personal video recorder. The stored programs are arranged in the storage medium according to their reception.

During a time-shifted reproduction operation, the stored broadcast signal is controllably replayed from a specific timing point, which may be any point of a stored program, enabling a variety of time-shift functions during playback. Such time-shift functions include fast forward, reverse, and slow motion play, video pause, program bookmarking (a function of selecting a specific position for repeated viewing), clip recording (a function of recording a specific section according to a time-shift function), and return-to-live (a function of displaying the currently received broadcast signal, for example, temporarily, while in a time-shift mode). Therefore, as a broadcast signal recording operation (recording mode) proceeds, i.e., while video recording in the storage medium is carried out to enable a subsequent operation to playback the stored content, the personal video recorder cannot enter a time-shift mode, since the hard disc drive is occupied with recording. Any time-shifting operation is terminated to enable a requested recording operation to proceed since, regardless of whether the personal video recorder is executing a time-shift function, the incoming video stream must be recorded in the hard disc upon entering a recording mode, which may be entered according to a preprogrammed schedule or by a simple recording command. Therefore, to free up the hard disc for recording the incoming stream, which is a stream of unknown length, the time-shift function is simply terminated (aborted).

In other words, a contemporary personal video recorder is unable to perform the above operations simultaneously, i.e., both recording and time-shifting. That is, if a recording operation is being performed, there is no provision for executing a time-shift function, and conversely, initiation of a recording operation during the execution of a time-shift function results in an immediate termination of the time-shift function.

The present invention has been made in view of the above-mentioned problems.

Embodiments of the present invention may provide a method of controlling a personal video recorder and a personal video recorder using the same, which enables simultaneous operations of recording and time-shifting.

Embodiments of the present invention may provide a method of controlling a personal video recorder and a personal video recorder using the same, which increases operational flexibility of a personal video recorder by enabling independent operations for both recording and time-shifting.

Embodiments of the present invention may provide a method of controlling a personal video recorder and a personal video recorder using the same, which enables the execution of a time-shift function while performing a recording operation.

Embodiments of the present invention may provide a method of controlling a personal video recorder and a personal video recorder using the same, which enables a continuation of the execution of a recording operation in the event of a time-shift function being executed during the recording operation.

Additional advantages, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

There is provided a personal video recorder having a storage medium for storing a video stream received in real time. The personal video recorder comprises a key input unit for inputting at least one of a recording command and a time-shift command according to a user selection; a downloader for downloading, according to the recording command, the received video stream for storage in the storage medium; an uploader for uploading, according to the time-shift command, the video stream stored in the storage medium; and a controller for independently controlling the downloading via the downloader and the uploading via the uploader.

According to another aspect of embodiments of the present invention, there is provided a method of controlling the personal video recorder. The method comprises downloading the video stream to a storage medium in response to an input to the personal video recorder of at least one of a recording command and a time-shift command; and uploading the broadcast signal from the storage medium simultaneously with the downloading, if the time-shift command is input while the downloading proceeds in response to the recording command..

It is to be understood that both the foregoing general description and the following detailed description of the present invention are exemplary and explanatory and are intended to provide further explanation of the invention as claimed.

Embodiments of the invention will now be described by way of nonlimiting example only, with reference to the drawings, in which:

FIG. 1 is a block diagram of a personal video recorder according to embodiments of the present invention; and

FIG. 2 is a flowchart of a method of controlling a personal video recorder according to embodiments of the present invention.

Reference will now be made in detail to exemplary embodiments of the present invention, examples of which are illustrated in the accompanying drawings. Where appropriate, like reference designations will be used throughout the drawings to refer to the same or similar parts.

Embodiments of the present invention are applicable to video apparatuses capable of storing a video signal received from various input sources such as a tuner or a peripheral device. For example, a tuner may be provided to receive a user-specified broadcast signal by tuning among available terrestrial or cable broadcast signals via a digital input signal or an analog input signal. A peripheral device such as a digital camcorder or DVD player may be connected to an external signal input port (not shown in the drawings) of the video apparatus. In any case, the input video signal supplied to the video apparatus is stored in the storage medium of a personal video recorder. The video signal input to a video apparatus incorporating embodiments of the present invention is typically encoded to provide a data stream configured in a transport packet format, i.e., a plurality of serially arranged transport packets each comprising a header and a payload. While a digital broadcast signal as provided from a broadcast station is already configured in a transport stream format, an analog broadcast signal may be encoded locally. The video signal from a peripheral device may require similar encoding prior to storage as a transport stream, and for the sake of convenience, a broadcast signal as described herein may also refer to an input to the video apparatus as received from the peripheral device as well as the tuner. The present invention may be embodied in a personal video recorder connected to a tuner and provided with audio and video output means, e.g., a display and speaker arrangement such as that provided by a general television receiver.

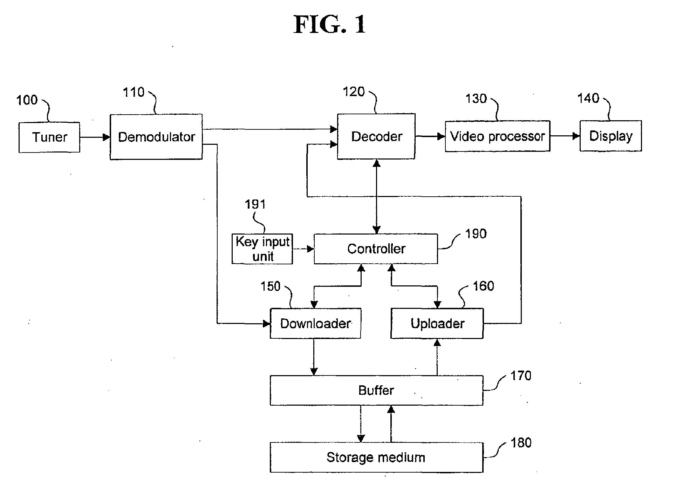

Referring to FIG. 1, a personal video recorder according to embodiments of the present invention includes a downloader 150, an uploader 160, a buffer 170, a storage medium 180 such as a hard disc, and a controller 190 connected to a key input unit 191 for inputting to the personal video recorder at least one of a recording command and a time-shift command according to a user selection. The downloader 150 downloads, according to the recording command, the received video stream for storage in the storage medium 180; and the uploader 160 uploads, according to the time-shift command, the video stream stored in the storage medium. Therefore, if the recording command and the time-shift command coexist in the personal video recorder, the controller 190 simultaneously controls the downloading via the downloader 150 and the uploading via the uploader 160. To achieve this, the controller 190 independently controls the downloading via the downloader 150 and the uploading via the uploader 160, such that, under control of the controller, each of the downloader and the uploader performs a multitasking operation with respect to the storage medium 180.

The buffer 170 is connected to the storage medium 180, to be interposed between the downloader 150 and the storage medium and between the uploader 160 and the storage medium, and stores (buffers) the real-time received video stream in response to an input of the recording command and the time-shift command. Accordingly, the controller 191 controls the uploader 160 to read from the buffer 170 in response to an input of the time-shift command. The downloaded broadcast signal is thus stored in the storage medium 180 via the downloader 150 and the buffer 170. The uploader 160, which is separately connected to the storage medium 180 via the buffer 170, uploads the stored broadcast signal via the buffer.

The personal video recorder may include or be connected to a tuner 100 for selectively receiving the video stream of a frequency according to a channel specified by a user and outputting a broadcast signal. The personal video recorder includes a demodulator 110 for demodulating the broadcast signal output from the tuner 100 and for outputting a demodulated broadcast signal to the downloader 150 and a decoder 120 for decoding the demodulated broadcast signal and for outputting a video reproduction signal according to one of the demodulated broadcast signal and the uploaded video stream. According to the type of broadcast signal supplied to the tuner 100 (or external signal input port), the demodulated broadcast signal may require encoding to enable the broadcast signal to be stored for selective reproduction.

The decoded video reproduction signal is output to a video processor 130 for processing (e.g., scaling) the decoded video reproduction signal, thereby enabling a video output to the user (viewer). Here, it should be appreciated that the broadcast signal (video stream) input to the personal video recorder typically includes video data, audio data, and additional data that are separately decoded and processed for output. For example, a display 140 may be provided for displaying the processed video reproduction signal, and a speaker (not shown) is typically provided for outputting a corresponding audio data stream.

In response to a recording command input, the controller 190 controls the downloading of the demodulated broadcast signal via the downloader 150 and the buffer 170, to thereby store the downloaded signal in the storage medium 180. Thus, the controller 190 stores in the storage medium 180 a broadcast signal to be later reproduced, for example, according to a time-shift function. In response to a time-shift command input, the controller 190 controls the uploading of a buffered broadcast signal, so that the uploaded signal is provided to the decoder 120 via the buffer 170 and the uploader 160. If a recording command and a time-shift command coexist, either by entering a recording mode while performing a time-shift function or by executing a time-shift function during a recording operation, the controller 190 outputs a control command for downloading the demodulated broadcast signal to the storage medium 180 via the downloader 150 and for uploading the broadcast signal from the storage medium 180 to the decoder 120 via the uploader 160.

Embodiments of the present invention enable multitasking by the downloader 150 and the uploader 160. During a time-shift operation, the downloader 150 downloads the broadcast signal to the storage medium 180 via the buffer 170. In the event of simultaneously performing a recording operation together with the time-shifting, the downloader 150 downloads the broadcast signal to the storage medium 180 via the buffer as soon as the uploader 160 uploads the broadcast signal downloaded to the storage medium 180 via the buffer 170 to the decoder 120 to perform time-shifting.

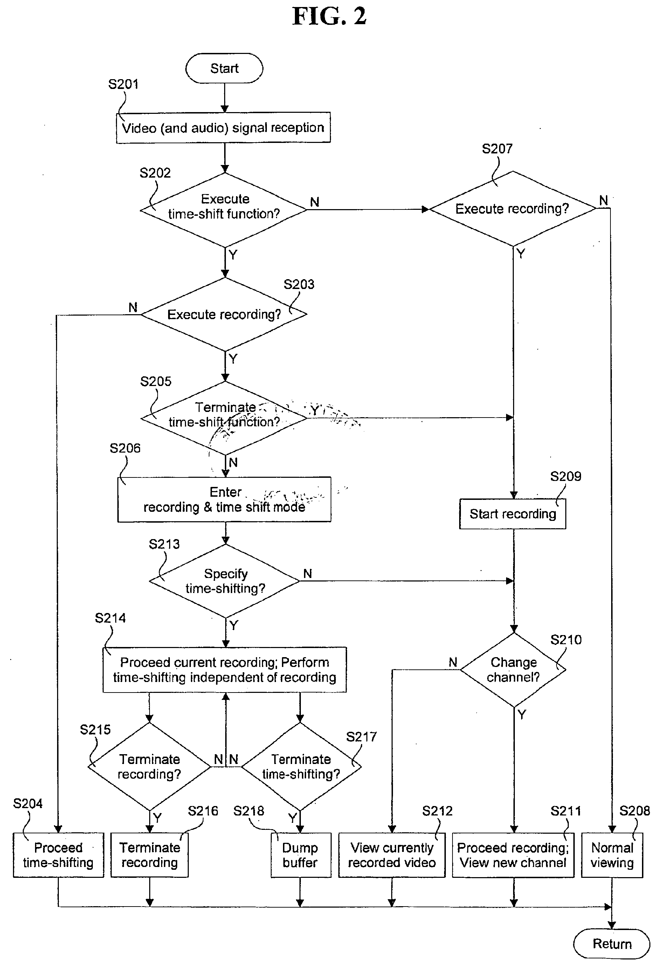

Referring to FIG. 2, illustrating a method of controlling a personal video recorder according to the present invention, a broadcast signal, i.e., a stream comprising a video signal and an audio signal, is received (S201). The received stream undergoes demodulation, decoding, and video/audio processing to be output, e.g., displayed. During such reception, the status of the user input commands is determined.

If it is determined that a time-shift command is input (S202), it is determined whether a recording command is input (S203). If a time-shift command is input but there is no recording command input, only the corresponding time-shifting operation proceeds (S204). In doing so, the downloader 150 downloads the broadcast signal for storage in the storage medium 180 via the buffer 170, thus enabling playback according to a specific time-shift function.

If, however, a recording command is input together with the time-shift command, it is determined whether the time-shift function is terminated (S205). If not, it is determined that a concurrent execution of both time-shifting and recording is desired. Thus, a recording and time-shift mode is entered (S206). Here, too, the downloader 150 downloads the broadcast signal for storage in the storage medium 180 via the buffer 170.

If it is first determined that there is no time-shift command input, it is then determined whether a recording command is input (S207), and normal television viewing is performed if neither command is input (S208). If it is determined that only the recording command is input, the broadcast signal is recorded in the storage medium (S209), whereby downloading of the broadcast signal to the storage medium via the buffer begins.

The currently stored broadcast signal and the broadcast signal reproduced from the specific timing point may be broadcast signals of a same channel or broadcast signals of different channels. Therefore, it is determined whether channel switching occurs during recording (S210), and if so, the recording of the same broadcast signal continues while the new channel is viewed (S211); otherwise, the currently recorded broadcast signal is viewed while the same recording proceeds (S212).

While in a recording and time-shift mode, it is determined whether a time-shift command for a specific timing point is input in the course of recording and time-shift mode operation (S213). If time-shifting is thus specified, execution of the time-shift function proceeds, simultaneously and independently with respect to the recording operation, using the buffered broadcast signal (S214). Here, the current recording of the broadcast signal continues, such that the broadcast signal is downloaded to the storage medium via the buffer by the downloader, while the broadcast signal downloaded to the storage medium via the buffer is uploaded to the decoder by the uploader. During the above simultaneous operations, the user input commands are continuously checked to determine whether either of the recording or time-shift operations are terminated. If it is determined that the recording operation is terminated (S215), the storage operation of the current stream is completed (S216). If it is determined that the time-shift operation is terminated (S217), the buffer is dumped (S218). Here, the buffered stream and the broadcast information downloaded to the storage medium may be deleted.

Embodiments of the present invention include a computer-readable medium storing a set of program commands for executing operations implemented by a computer. The computer-readable medium may include the program commands, a data file, a data structure, and other computer-program-related data. The medium and the stored program commands are configured in accordance with embodiments of the present invention and may be specifically designed for the above-described embodiment or may comprise a device and program combination known to those skilled in the field of computer software.

Embodiments of the present invention allow both a recording function and a time-shift function to be simultaneously enabled. A time-shift function is applicable to a channel currently viewed by a user even if a different channel is being recorded. Since time-shifting is not interrupted by a recording operation, such as a preprogrammed recording operation, the opearational flexibility of a personal video recorder is enhanced.

It will be apparent to those skilled in the art that various modifications can be made in the present invention without departing from the scope of the invention. Thus, it is intended that the present invention covers such modifications provided they come within the scope of the appended claims.

## Claims

1. A personal video recorder having a storage medium for storing a video stream received in real time, the personal video recorder comprising:
a key input unit for inputting at least one of a recording command and a time-shift command according to a user selection;
a downloader for downloading, according to the recording command, the received video stream for storage in the storage medium;
an uploader for uploading, according to the time-shift command, the video stream stored in the storage medium; and
a controller for independently controlling the downloading via said downloader and the uploading via said uploader.

2. The personal video recorder of claim 1, wherein, if the recording command and the time-shift command coexist in the personal video recorder, said controller simultaneously controls the downloading via said downloader and the uploading via said uploader.

3. The personal video recorder of claim 1, wherein said downloader and said uploader are separately connected to the storage medium.

4. The personal video recorder of claim 3, wherein, under control of said controller, each of said downloader and said uploader performs a multitasking operation with respect to the storage medium.

5. The personal video recorder of claim 1, further comprising:
a buffer connected to the storage medium, said buffer being interposed between said downloader and the storage medium and being interposed between said uploader and the storage medium.

6. The personal video recorder of claim 5, wherein said buffer stores the real-time received video stream in response to an input of the recording command and the time-shift command.

7. The personal video recorder of claim 6, wherein said controller controls said uploader to read from said buffer in response to an input of the time-shift command.

8. The personal video recorder of claim 1, further comprising:
a tuner for selectively receiving the video stream of a frequency according to a channel specified by a user and outputting a broadcast signal.

9. The personal video recorder of claim 1, further comprising:
a demodulator for demodulating the broadcast signal output from said tuner and for outputting a demodulated broadcast signal to said downloader; and
a decoder for decoding the demodulated broadcast signal and for outputting a video reproduction signal according to one of the demodulated broadcast signal and the uploaded video stream.

10. The personal video recorder of claim 9, further comprising:
a video processor for processing the decoded video reproduction signal; and
a display for displaying the processed video reproduction signal.

11. A method of controlling a personal video recorder having a storage medium for storing a video stream received in real time, the method comprising:
downloading the video stream to a storage medium in response to an input to the personal video recorder of at least one of a recording command and a time-shift command; and
uploading the broadcast signal from the storage medium simultaneously with said downloading, if the time-shift command is input while said downloading proceeds in response to the recording command.

12. The method of claim 11, wherein said uploading is performed according to a specific timing point determined by the time-shift command.

13. The method of claim 12, wherein the video stream stored in the storage medium according to the recording command and the video stream uploaded according to the time-shift command are broadcast signals of one broadcast channel.

14. The method of claim 12, wherein the video stream stored in the storage medium according to the recording command and the video stream uploaded according to the time-shift command are broadcast signals of different broadcast channels.

15. The method of claim 11, wherein each of said downloading and said uploading is performed as a multitasking operation with respect to the storage medium.

16. The method of claim 11, wherein the uploaded video stream is provided to a decoder for decoding the real-time received video stream.

17. The method of claim 16, further comprising:
decoding the uploaded video stream.

18. The method of claim 11, further comprising:
outputting to a user the uploaded video stream via a video processor.

19. A television receiver including a personal video recorder having a storage medium for storing a video stream received in real time, the television receiver comprising:
a tuner for selectively receiving the video stream of a frequency according to a channel specified by a user and outputting a broadcast signal;
a demodulator for demodulating the broadcast signal output from said tuner and for outputting a demodulated broadcast signal;
a key input unit for inputting at least one of a recording command and a time-shift command according to a user selection;
a downloader for downloading, according to the recording command, the demodulated broadcast signal and storing the downloaded signal in the storage medium;
an uploader for uploading, according to the time-shift command, the video stream stored in the storage medium;
a decoder for decoding the demodulated broadcast signal and for outputting a video reproduction signal according to one of the demodulated broadcast signal and the uploaded video stream;
a video processor for processing the decoded video reproduction signal;
a display for displaying the processed video reproduction signal; and
a controller for independently controlling the downloading via said downloader and the uploading via said uploader.

20. The television receiver of claim 19, further comprising:
a buffer connected to the storage medium, said buffer being interposed between said downloader and the storage medium and being interposed between said uploader and the storage medium.
